# DEMANDE DE BREVET EUROPEEN

(11) **EP 3 865 762 A1**
(43) Date de publication de la demande: **18.08.2021**
(21) Numéro de dépôt: 21157338.1
(22) Date de dépôt: 16.02.2021
(51) Int. Cl.: F21S 8/00, F21S 19/00, F21V 9/30

(54) **SYSTÈME ET PROCÉDÉ D ÉCLAIRAGE DE L ESPACE AMBIANT, ET PROGRAMME D ORDINATEUR ASSOCIÉ**

(30) Priorité: 17.02.2020 FR 2001562
(71) Demandeur: Lhotellier SA, 76340 Blangy-sur-Bresle (FR)
(72) Inventeur: VOLLEMAERE, Eric, 76260 EU (FR); DEQUEVAUVILLER, Quentin, 76270 SAINT-MARTIN-L'HORTIER (FR); POSTEL, Julien, 80480 PONT-DE-METZ (FR)
(74) Mandataire: Fidal Innovation

(57) **Abrégé**

Le système d'éclairage d'un espace ambiant comprend un composant structurel (1) avec une matière (3) phosphorescente dans la lumière visible en réponse à une excitation dans une bande de longueur d'onde comprise entre 315 nanomètres et 380 nanomètres et une source lumineuse (9), qui émet dans une bande de longueur d'onde comprise entre 315 nanomètres et 380 nanomètres. La source lumineuse (9) est contrôlée pour émettre une lumière d'excitation de manière à obtenir un éclairage contrôlé de l'espace ambiant (8) par phosphorescence de la matière phosphorescente (3).

## Description

### DOMAINE DE L'INVENTION

La présente invention se rapporte à des systèmes et procédés d'éclairage de l'espace ambiant, et à des programmes d'ordinateur associés.

### ARRIERE-PLAN TECHNOLOGIQUE

Plus précisément, l'invention se rapporte à un système d'éclairage de l'espace ambiant. Par « espace ambiant », on fait référence à un espace d'activité humaine. Par « éclairage » d'un espace ambiant d'activité humaine, on fait ainsi référence à une émission de lumière dont la luminosité et l'échelle sont compatibles avec les activités humaines.

L'espace ambiant peut être intérieur à un bâtiment, ou extérieur.

Dans le domaine de l'éclairage de l'espace ambiant, il est connu de faire appel à un éclairage artificiel dans un spectre de lumière visible. Un tel éclairage apporte de la sécurité par rapport à une situation dans laquelle l'espace ambiant est plongé dans la pénombre. Toutefois, ces éclairages artificiels en lumière visible, plutôt qualifiés d'« illumination » quand ils sont très vifs, apportent aussi une pollution lumineuse qui peut être néfaste. On a aussi utilisé des systèmes phosphorescents pour produire une luminosité douce ou de la luminescence dans l'espace ambiant. Un système phosphorescent nécessite d'être excité par un rayonnement électromagnétique, et émet une lumière par phosphorescence après un certain temps d'excitation. Le spectre électromagnétique de phosphorescence est généralement décalé par rapport au spectre d'excitation. Au contraire de la fluorescence, la phosphorescence se caractérise par une persistance de l'émission lumineuse après la fin de l'excitation. Une solution pour lutter contre la pollution lumineuse pour les êtres humains est d'utiliser un rayonnement électromagnétique d'excitation invisible à l'œil humain. Le document WO 92/20,757 décrit qu'il est déjà alors connu d'améliorer la perception du tracé des routes au moyen de matériaux de surface photoluminescents absorbant une lumière ultra-violette. Ce document décrit une réalisation qui restituerait au sol une multitude d'éclats de lumière visible comparable aux lueurs produites par la présence d'un très grand nombre de lucioles.

Bien que la littérature décrive des matériaux phosphorescents annoncés comme présentant un phénomène de luminescence de plusieurs dizaines d'heures, en pratique l'intensité lumineuse de phosphorescence décroit rapidement, de sorte que l'émission lumineuse par la phosphorescence est rapidement insuffisante pour une activité humaine. Même si de nombreuses recherches ont été faites ces 20 dernières années sur le développement de composés phosphorescents spécifiques présentant une meilleure durée de vie, ces systèmes n'ont jamais été mis en oeuvre en pratique de manière satisfaisante.

### RESUME DE L'INVENTION

Ainsi, l'invention se rapporte à un système d'éclairage d'un espace ambiant comprenant :
- un composant structurel comprenant au moins une face accessible délimitant un espace ambiant, le composant structurel comprenant une matière phosphorescente dans la lumière visible en réponse à une excitation dans une bande de longueur d'onde comprise entre 315 nanomètres et 380 nanomètres, disposée de manière à émettre ladite lumière visible depuis la face accessible,
- au moins une source lumineuse, disposée en regard de la face accessible, et comprenant au moins une source d'émission lumineuse d'excitation, associée à la matière phosphorescente, émettant dans une bande de longueur d'onde comprise entre 315 nanomètres et 380 nanomètres, la source lumineuse étant contrôlée pour émettre une lumière d'excitation de manière à obtenir un éclairage contrôlé de l'espace ambiant par phosphorescence de la matière phosphorescente.

Grâce à ces dispositions, on peut proposer une solution pour améliorer la perception de l'espace ambiant, faiblement polluante visuellement, et optimisable pour chaque application souhaitée.

Selon différents aspects, il est possible de prévoir l'une et/ou l'autre des dispositions ci-dessous.

Selon une réalisation, le système d'éclairage comprend un contrôleur contrôlant la source lumineuse selon une règle de contrôle prédéterminée.

Selon une réalisation, le contrôleur contrôle la source lumineuse pour émettre la lumière d'excitation selon un agenda temporel prédéterminé, notamment une fréquence prédéterminée.

Selon une réalisation, le contrôleur contrôle la source lumineuse en réaction à un signal obtenu par détection de présence ou de mouvement dans l'espace ambiant ou dans un espace voisin de l'espace ambiant.

Selon une réalisation, la source lumineuse est contrôlée en outre en fonction d'une information d'horloge.

Selon une réalisation, le système comprend une source d'émission lumineuse dans le spectre visible, et la source d'émission lumineuse dans le spectre visible est contrôlée en outre pour émettre une lumière visible de manière associée à la lumière d'excitation.

Selon une réalisation, le système comprend une source d'émission lumineuse dans le spectre visible, et la source d'émission lumineuse dans le spectre visible est contrôlée en outre pour émettre une lumière visible simultanément à la lumière d'excitation.

Selon une réalisation, la source d'émission lumineuse dans le spectre visible est contrôlée en fonction d'un agenda temporel prédéterminé, d'un signal obtenu par détection de présence ou de mouvement dans l'espace ambiant ou dans un espace voisin de l'espace ambiant, d'un signal obtenu par détection de luminosité ambiante et/ou d'une information d'horloge.

Selon une réalisation, dans une première phase, la source d'émission lumineuse dans le spectre visible et la source d'émission lumineuse d'excitation sont commandées pour émettre une lumière et, dans une deuxième phase, au moins la source d'émission lumineuse dans le spectre visible est désactivée.

Selon une réalisation, la source d'émission lumineuse dans le spectre visible et la source d'émission lumineuse d'excitation sont comprises au sein d'une même source lumineuse, ou sont fournies dans des sources lumineuses distinctes espacées dans l'espace ambiant.

Selon une réalisation, le système comprend en outre au moins une deuxième source lumineuse, disposée en regard de la face accessible, et comprenant au moins une deuxième source d'émission lumineuse d'excitation, associée à la matière phosphorescente, émettant dans une bande de longueur d'onde comprise entre 315 nanomètres et 380 nanomètres, la deuxième source lumineuse étant contrôlée pour émettre une lumière excitatrice de manière à obtenir un éclairage contrôlé de l'espace ambiant par luminescence de la matière phosphorescente.

Selon une réalisation, la source lumineuse est une première source lumineuse, et la première source lumineuse et la deuxième source lumineuse sont contrôlées de manière associée pour obtenir un éclairage contrôlé d'un espace ambiant par luminescence des matières phosphorescentes.

Selon une réalisation, la source lumineuse est une première source lumineuse, et la première source lumineuse et la deuxième source lumineuse sont contrôlées de manière simultanée pour obtenir un éclairage contrôlé d'un espace ambiant par luminescence des matières phosphorescentes.

Selon un autre aspect, l'invention se rapporte à un procédé d'éclairage d'un espace ambiant comprenant :
- un composant structurel comprenant au moins une face accessible délimitant un espace ambiant, le composant structurel comprenant une matière phosphorescente dans la lumière visible en réponse à une excitation dans une bande de longueur d'onde comprise entre 315 nanomètres et 380 nanomètres, disposée de manière à émettre depuis la face accessible, étant fourni, au moins une source lumineuse, disposée en regard de la face accessible, et
- comprenant au moins une source d'émission lumineuse d'excitation, associée à la matière phosphorescente, émettant dans une bande de longueur d'onde comprise entre 315 nanomètres et 380 nanomètres, est contrôlée pour émettre une lumière excitatrice de manière à obtenir un éclairage contrôlé de l'espace ambiant par luminescence de la matière phosphorescente.

Selon un autre aspect, l'invention se rapporte à un programme d'ordinateur comprenant des instructions de code de programme pour l'exécution des étapes de ce procédé lorsque ledit programme est exécuté sur un ordinateur.

### BREVE DESCRIPTION DES DESSINS

Des modes de réalisation de l'invention seront décrits ci-dessous par référence aux dessins, décrits brièvement ci-dessous :
La Figure 1 représente schématiquement, en vue de côté, un exemple de mélange de granulats photoluminescents dans la masse d'un composant structurel de faible épaisseur.
La Figure 2 représente schématiquement, en vue de côté, un exemple de collage de granulats photoluminescents sur la surface d'un composant structurel.
La Figure 3 représente schématiquement, en vue de côté, un exemple d'incrustation de granulats en partie supérieure d'un composant structurel.
La Figure 4 est une vue de côté d'un premier exemple de réalisation d'un système.
La Figure 5 est une vue similaire à la figure 4 pour un deuxième exemple de réalisation de système.
La Figure 6 est une vue similaire à la figure 4 pour un troisième exemple de réalisation de système.
La Figure 7 est une vue schématique d'un système de contrôle des émissions de lumière.
La Figure 8 est un exemple de courbe de l'intensité de la restitution luminescente d'une surface photoluminescente au cours du temps en fonction d'une animation du rayonnement électromagnétique ambiant.
La Figure 9 est une vue de dessus illustrant une animation de l'éclairage par réactivation progressive des sources de lumière invisible dans un sens de circulation dans une première configuration où une première source est réactivée pour rétablir un bon niveau de restitution phosphorescente dans sa zone d'influence.
La Figure 10 est une vue correspondant à la figure 9 dans une deuxième configuration où une seconde source est réactivée après la première pour rétablir un bon niveau de restitution phosphorescente dans la zone suivante.
La Figure 11 est une vue de côté d'un mode de réalisation alternatif de source d'éclairage.

Sur les dessins, des références identiques désignent des objets identiques ou similaires.

### DESCRIPTION DETAILLEE

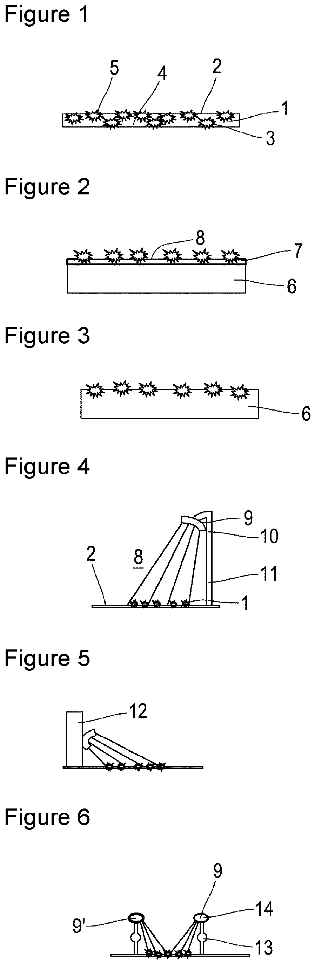

La figure 1 représente schématiquement un composant structurel 1 selon un mode de réalisation. Le composant structurel 1 comporte une face accessible 2. La face accessible 2 est typiquement une face visible par un humain, dans une configuration dans laquelle le composant structurel 1 est opérationnel. Dans le cas présent, la face accessible 2 est horizontale, et tournée vers le haut. Par exemple, le composant structurel 1 est un élément de bâtiment ou d'un ouvrage de travaux publics. Par exemple, le composant structurel 1 est un sol, ou une portion de sol. Dans ce cas, la face accessible 2 peut être plane, ou sensiblement plane.

Le composant structurel 1 comporte une matière phosphorescente 3. Selon l'exemple de la figure 1, la matière phosphorescente comprend une matrice 4 dans laquelle sont dispersés des granulats phosphorescents 5. La matrice 4 est par exemple un matériau fluide apte à solidifier, tel qu'un béton de ciment, un enduit épais, un béton bitumineux, ...

Les granulats phosphorescents 5 sélectionnés peuvent comprendre des mélanges verriers ou de résine, associés à des composés inorganiques rendus luminophores par association à des éléments de la famille des Lanthanides, tel que l'Europium (Eu) ou le Dysprosium (Dy).

La couleur de restitution de la lumière peut dépendre du choix de la nature du composé inorganique. Selon un exemple, on peut utiliser un composé inorganique de formule brute XAl₂O₄, ou X est un alcalino-terreux tel que le Strontium (Sr), le Baryum (Ba) ou encore le Calcium (Ca).

Les granulats phosphorescents peuvent être caractérisés par leur spectre d'émission de lumière phosphorescente en réponse à une excitation lumineuse. Dans le cas présent, on choisit des granulats phosphorescents émettant dans le spectre de la lumière visible quand ils sont excités par une lumière d'excitation dans une plage de longueur d'onde comprise entre 315 nanomètres et 380 nanomètres.

Quand on mentionne une lumière d'excitation dans une plage de longueur d'onde comprise entre 315 nanomètres et 380 nanomètres, il s'agit d'un rayonnement électromagnétique d'excitation qui présente un spectre présentant un pic d'intensité à une longueur d'onde comprise dans la plage 315-380 nanomètres. Il n'est pas nécessaire que la lumière d'excitation présente un spectre avec une intensité soutenue dans l'intégralité de la plage 315-380 nanomètres. De plus, la lumière d'excitation peut présenter un pic d'intensité également en dehors de la plage 315-380 nanomètres.

Comme cela est représenté sur la figure 1, le composant structurel est disposé pour que la face accessible 2 reçoive une lumière d'excitation depuis l'extérieur. La lumière phosphorescente est également émise depuis la face accessible 2 vers l'extérieur.

Notamment, une couche superficielle du composant structurel peut présenter une concentration supérieure en granulats phosphorescents. Ceci peut être réalisé, par exemple selon la figure 3, quand le composant structurel est réalisé à partir d'un matériau fluide apte à solidifier, en répandant les granulats phosphorescents en surface du matériau encore fluide en cours de solidification, et en les incrustant dans la couche superficielle de celui-ci encore fluide, la solidification définitive retenant les granulats phosphorescents dans cette couche superficielle.

La figure 2 représente schématiquement un deuxième mode de réalisation. Ce mode de réalisation diffère de la figure 1 par le mode d'intégration des granulats au composant structurel 1. Dans ce mode de réalisation, le composant structurel 1 peut comprendre une base structurelle 6 munie d'une face supérieure 7 et une fine couche superficielle 8 sur sa face extérieure 7. Les granulats phosphorescents 5 sont fixés à la surface 7 par la couche 8 qui fait office de colle. La couche structurelle superficielle 8 peut être continue, ou discontinue dans la direction horizontale. Les granulats phosphorescents 5 peuvent être disposés de façon serrée ou être dispersés sur la couche de colle 8.

Selon encore une variante, comme représenté sur la figure 3, les granulats phosphorescents 5 peuvent être assemblés à la base structurelle 6 par un système de fixation mécanique. Les granulats phosphorescents 5 sont fournis dans un produit apte à être fixé mécaniquement à la base structurelle. Le système de fixation mécanique peut par exemple comprendre un vissage, un sertissage, ou autre.

La figure 4 représente schématiquement un exemple d'un système d'éclairage de l'espace ambiant 8. L'espace ambiant 8 peut être défini comme l'espace qui, à tout moment, est en position d'être éclairé par un des composants d'éclairage du système. Typiquement, il va comprendre un espace compris entre la source de lumière et le composant structurel.

La figure 4 représente une source lumineuse 9. La source lumineuse 9 désigne un produit unitaire pouvant comprendre une ou plusieurs sources lumineuses individuelles commandées ensemble ou individuellement pour émettre un rayonnement électromagnétique sous la forme d'un faisceau lumineux commun. Dans le présent cas, la source lumineuse 9 est portée par un lampadaire 10, au haut d'un mât 11. En variante, on pourrait prévoir une borne.

La source lumineuse 9 est disposée en regard du composant structurel 1, et notamment de la face accessible 2 de celui-ci, de manière à ce que le faisceau lumineux soit émis en direction de, et jusqu'à la face accessible 2.

Selon un autre exemple, comme représenté sur la figure 5, la source lumineuse 9 est par exemple portée par un muret 12.

Selon encore un autre exemple, comme représenté sur la figure 6, la source lumineuse 9 est portée par un garde-corps 13, et est notamment disposée sous la main-courante 14 du garde-corps 13.

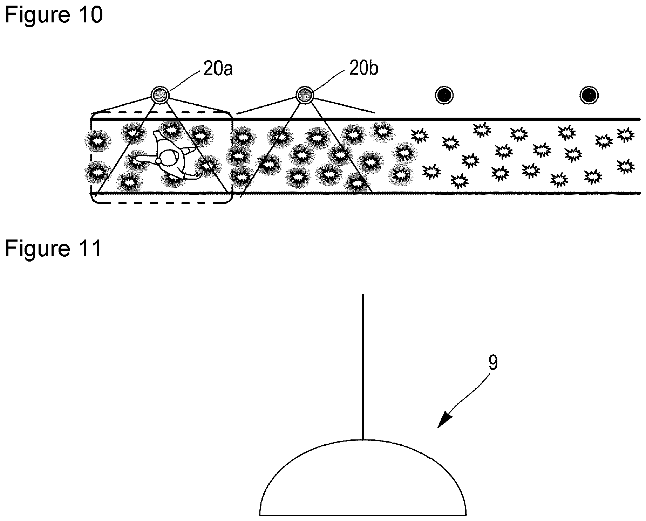

Selon une variante non représentée, la source lumineuse 9 pourrait être suspendue, comme représenté sur la figure 11.

La source lumineuse 9 émet un spectre lumineux. Le spectre lumineux émis peut être constitué par l'ajout d'une pluralité de sources d'émission lumineuse individuelles présentant des caractéristiques différentes les unes des autres.

La source lumineuse 9 comprend notamment des sources lumineuses individuelles émettant une lumière de spectre électromagnétique défini, comprenant un pic compris dans la plage de longueurs d'onde allant de 315 nanomètres à 380 nanomètres. Cette description ne présage pas de la largeur du pic en question, de son intensité, du nombre de pics éventuels dans cette plage de longueurs d'onde, et de la présence d'un ou plusieurs pics dans une autre plage, notamment dans une plage visible. Par exemple, dans le cas d'un granulat phosphorescent 5 à l'aluminate de strontium, le pic peut être compris dans une plage comprise entre 320 nm et 365 nm.

Selon un exemple, la source lumineuse 9 comprend uniquement des sources d'émission lumineuse individuelles émettant une lumière présentant un spectre comprenant un pic compris dans la plage de longueurs d'onde allant de 315 nanomètres à 380 nanomètres.

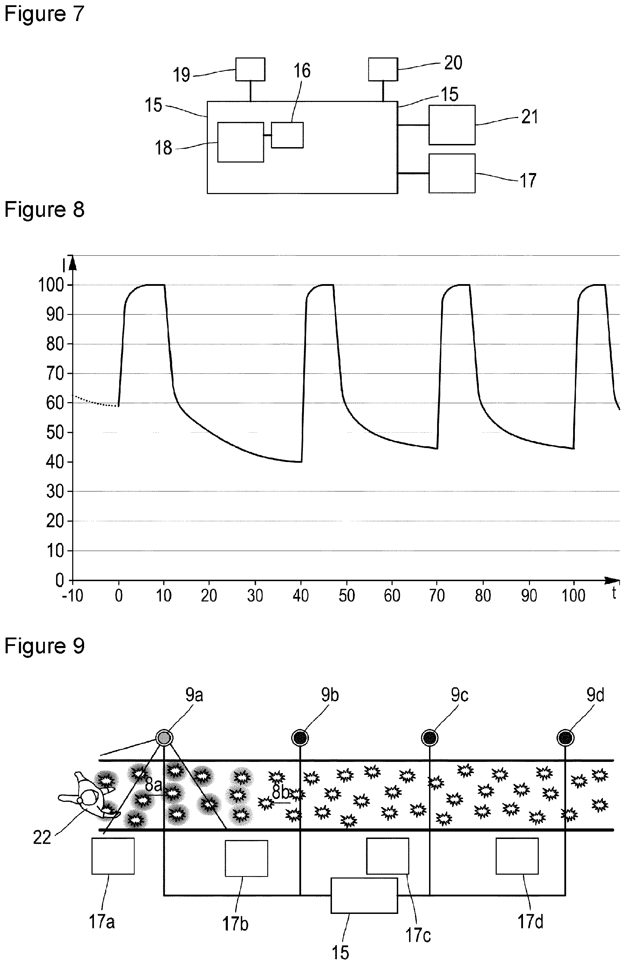

Comme visible sur la figure 7, le système comprend un contrôleur 15 contrôlant la source lumineuse 9. Le contrôleur 15 comprend par exemple un processeur 18 adapté pour commander la source lumineuse 9 en mode actif ou inactif. En mode actif, la source lumineuse 9 émet une lumière. En mode inactif, la source lumineuse 9 n'émet pas de lumière. Le contrôleur 15 applique donc une règle prédéterminée pour le contrôle de la source lumineuse 9.

Selon un exemple, le processeur commande la source lumineuse 9 selon un agenda prédéterminé. Pour ce faire, le processeur accède à une horloge 16. Selon un exemple, l'agenda prédéterminé peut comprendre une heure de début de mode actif de la source lumineuse 9 et/ou une heure de fin de mode actif de la source lumineuse 9 chaque jour. De plus, l'agenda peut comprendre, chaque jour, une alternance de plages temporelles de mode actif et de plages temporelles de mode non-actif entre les heures de début et de fin. L'alternance est par exemple régulière. La durée de la plage de mode actif peut être égale à la durée de la plage de mode inactif. En variante, elle peut être différente.

Selon une autre réalisation, le passage en mode actif ou en mode inactif n'est pas forcément préprogrammé uniquement selon un agenda prédéterminé. En alternative ou en complément, on peut utiliser un capteur 17 de présence ou de mouvement dans l'espace ambiant 8 ou dans un espace voisin de l'espace ambiant, pour contrôler le passage en mode actif ou en mode inactif.

Selon une réalisation, la source lumineuse comprend une combinaison de sources d'émission lumineuse individuelles émettant une lumière présentant un spectre comprenant un pic compris dans la plage de longueurs d'onde allant de 315 nanomètres à 380 nanomètres (dites ci-dessous «sources UV» 19) et de sources d'émission lumineuse individuelles émettant une lumière visible (dites ci-dessous « sources visibles » 20), ces groupes de sources d'émission lumineuse étant contrôlable de manière indépendante, mais coordonnée, par le contrôleur 15.

Le processeur 18 est adapté pour commander aux sources UV 19 et aux sources visibles 20 de passer en mode actif ou inactif. En mode actif, la source UV 19 / visible 20 émet une lumière. En mode inactif, la source UV 19 / visible 20 n'émet pas de lumière. Le contrôleur 15 applique donc une règle prédéterminée pour le contrôle de chaque groupe de sources.

Selon un exemple, le processeur commande la source lumineuse 9 selon un agenda prédéterminé. Pour ce faire, le processeur accède à l'horloge 16. Selon un exemple, l'agenda prédéterminé peut comprendre une heure de début de mode actif des sources visibles 20, une heure de fin de mode actif des sources visibles 20, une heure de début de mode actif des sources UV 19, et/ou une heure de fin de mode actif des sources UV 19 chaque jour. Notamment, l'heure de début de mode actif des sources UV 19 peut être antérieure à l'heure de fin de mode actif des sources visibles 20. De plus, l'agenda peut comprendre, chaque jour, une alternance de plages temporelles de mode actif et de plages temporelles de mode non-actif entre les heures de début et de fin pour l'un, l'autre, ou chaque groupe de sources. L'alternance est par exemple régulière. La durée de la plage de mode actif peut être égale à la durée de la plage de mode inactif. En variante, elle peut être différente.

Selon une autre réalisation, le passage en mode actif ou en mode inactif des sources visibles n'est pas forcément préprogrammé uniquement selon un agenda prédéterminé. On peut notamment prévoir un capteur de luminosité ambiante 21 qui détecte la luminosité ambiante et commande le passage des sources visibles 20 en mode actif à la détection d'une luminosité ambiante inférieure à un seuil prédéterminé, ou selon plusieurs seuils prédéterminés utilisés en fonction de l'heure.

En alternative ou en complément, on peut utiliser un capteur 17 de présence ou de mouvement dans l'espace ambiant 8 ou dans un espace voisin de l'espace ambiant, pour contrôler le passage des sources UV 19 en mode actif ou en mode inactif.

La description qui vient d'être faite prévoit qu'une même source lumineuse 9 comprend à la fois des sources UV 19 et des sources visibles 20. Toutefois, en variante, on pourrait prévoir une source lumineuse 9 comprenant des sources UV 19, et une autre source lumineuse, espacée de celle-ci, comprenant des sources visibles 20, dont les faisceaux d'émission éclairent un même espace ambiant, si ces sources lumineuses sont contrôlées par un contrôleur 15 commun.

La figure 8 illustre un exemple de scénario concret. La figure 8 est un diagramme temporel présentant, en abscisse, le temps, et en ordonnée, l'intensité de luminescence du composant structurel 1 garni des granulats phosphorescents 5.

Au début du cycle proposé sur la figure 8, on se situe en journée, et la source lumineuse 9 est en mode inactif.

Dans l'exemple de réalisation proposé ici, les sources visibles 20 ont un spectre qui ne comprend pas ou peu de rayonnement dans le domaine ultra-violet.

En soirée, au temps indiqué comme « 0 », le capteur de luminosité ambiante 21 détecte une luminosité ambiante inférieure à un certain seuil, et le contrôleur 15 commande le passage en mode actif des sources visibles 20.

Simultanément, le contrôleur 15 commande le passage en mode actif des sources UV 19. En variante, ce passage en mode actif peut être commandé après un temps prédéterminé après le passage en mode actif des sources visibles 20, tel que déterminé par l'horloge 16.

Dans ces conditions, l'espace ambiant 8 est éclairé par les sources visibles 20. Potentiellement, l'espace ambiant 8 est également éclairé par les sources UV 19, mais la composante visible de ces sources à une intensité moindre (voire nulle) que celle de l'éclairage par les sources visibles 20, il est difficilement détectable par un éventuel humain présent dans l'espace ambiant. Ainsi l'espace ambiant 8 est également éclairé par la luminescence du composant structurel 1, mais l'intensité lumineuse de cette luminescence étant masquée par la puissance de l'éclairage par les sources visibles 20, elle est encore difficilement détectable par un éventuel humain présent dans l'espace ambiant (sur la figure 8, la courbe de luminescence du composant structurel 1 est tracée en pointillé tant que la puissance de lumière visible masque la luminescence).

Puis, typiquement dès qu'il fait complètement nuit, le contrôleur 15 commande le passage des sources visibles 20 en mode inactif (temps « t=10 » sur la figure 8). Cette commande peut se faire par exemple à une heure prédéterminée (par exemple, 22 heures) ou une durée de temps prédéterminée après le passage en mode actif.

Dans ces conditions, l'espace ambiant 8 est éclairé par luminescence du composant structurel 1 (sur la figure 8, la courbe de luminescence du composant structurel 1 est tracée en trait plein tant que les sources de lumière visible reste inactives). On obtient ainsi un éclairage « doux » comparable à celui d'une nuée de lucioles posées au sol. Potentiellement, l'espace ambiant 8 est également éclairé par les sources UV 19, mais la composante visible de ces sources a une intensité moindre que celle de l'éclairage par luminescence du composant structurel 1, il est masqué par celui-ci, et par conséquent difficilement détectable par un éventuel humain présent dans l'espace ambiant.

Le cas échéant, simultanément au passage des sources visibles 20 en mode inactif, le contrôleur 15 a commandé le passage des sources UV 19 en mode inactif. Ainsi, la luminescence du composant structurel 1 dans l'espace ambiant 8 n'est pas altérée par une éventuelle composante visible des sources UV 19. Ce passage en mode inactif peut être simultané, comme illustré en figure 8 (« t = 10 »), ou antérieur d'une durée prédéterminée au passage des sources visibles 20 en mode inactif, ou encore postérieur d'une durée prédéterminée au passage des sources visibles 20 en mode inactif.

Les sources visibles 20 et UV 19 étant inactives, l'intensité lumineuse du phénomène de phosphorescence décroit au cours du temps (figure 8 entre « t = 10 » et « t = 40 »).

Au bout d'un temps prédéterminé, tel que détecté par l'horloge (temps « t=40 » sur la figure 8, le contrôleur 15 peut commander le passage des sources UV 19 en mode actif. En variante, le contrôleur 15 peut commander le passage des sources UV 19 en mode actif lorsque le capteur de luminosité ambiante 21 détecte une luminosité ambiante inférieure à un certain seuil. Ainsi, le contrôleur 15 reçoit une information en provenance de l'horloge 16 et une information en provenance du capteur de luminosité ambiante 21 pour déterminer de commander le passage en mode actif des sources visibles 20 et/ou des sources UV 19.

Le contrôleur 15 commande ensuite le passage en mode inactif des sources UV 19, par exemple au bout d'une durée prédéterminée mesurée via l'horloge 16 (temps « t=50 » sur la figure 8).

Ce cycle peut être répété plusieurs fois au cours de la nuit. Lors de ces cycles nocturnes on peut éventuellement changer le seuil inférieur de luminosité à partir duquel les sources UV19 sont réactivées (sur la figure 8, seuil minimum d'intensité de luminescence égal à 40 à « t = 40 », puis seuil minimum d'intensité de luminescence égal à 45 à partir de « t = 70 »).

Les étapes ultérieures ne sont pas représentées sur la figure 8, mais peuvent être symétriques du scénario mis en œuvre au crépuscule pour l'aube.

A une heure prédéterminée, telle que définie par l'horloge 16, le contrôleur commande pour une dernière fois le passage en mode inactif des sources UV 19 (à moins que celles-ci ne soient alors déjà en mode inactif).

A une heure prédéterminée, telle que définie par l'horloge 16, et/ou en fonction d'une information de lumière ambiante telle que mesurée par le capteur de luminosité ambiante 21, le contrôleur 15 commande le passage des sources visibles 20 en mode actif. Puis, à une heure prédéterminée, telle que définie par l'horloge 16, et/ou en fonction d'une information de lumière ambiante telle que mesurée par le capteur de luminosité ambiante 21, le contrôleur 15 commande le passage des sources visibles 20 en mode inactif.

En variante ou en complément, le scénario qui vient d'être décrit peut en outre utiliser une donnée de détection issue du capteur de présence ou de mouvement. Selon un exemple, en cas de donnée de détection issue du capteur de présence ou de mouvement, le contrôleur 15 commande le passage en mode actif des sources UV 20. Cette commande vient par exemple se superposer au cycle décrit ci-dessus basé sur l'horloge 16. En variante, une commande du contrôleur 15 basée sur une donnée de détection issue du capteur de présence ou de mouvement peut altérer le cycle basé sur l'horloge 16, par exemple en décalant celui-ci.

Comme cela a été représenté sur la figure 6, on peut disposer de plusieurs sources lumineuses 9, 9'. Dans ce cas, celles-ci éclairent la même face accessible 2 du composant structurel 1.

En variante ou en complément, comme représenté sur la figure 9, on peut disposer d'une pluralité de sources lumineuses 9 éclairant des zones voisines du composant structurel 1, et adressant donc diverses zones de l'espace ambiant 8.

Les sources lumineuses 9, qui sont chacune comme décrit ci-dessus, peuvent être désignées individuellement par les références 9a, 9b, 9c, 9d. Les lettres de référence « a », « b », « c » et « d » sont utilisées pour désigner des objets locaux dans les zones respectives associées aux sources lumineuses 9a, 9b, 9c, 9d. Les sources lumineuses 9a-9d peuvent être caractérisées par leur localisation. Par exemple, les sources lumineuses 9 sont disposées le long d'un trajet. Les sources lumineuses 9a, 9b, 9c, 9d peuvent être contrôlées chacune par un contrôleur 15 indépendant. En variante, les sources lumineuses 9a-9d peuvent être commandées par un contrôleur commun 15. Le contrôleur commun 15 peut mettre en œuvre les scénarios de contrôle décrits ci-dessus pour chaque source lumineuse 9a-9d. Selon un exemple, les scénarios sont mis en œuvre de manière simultanée pour les différentes sources lumineuses. Toutefois, en variante, les scénarios peuvent être mis en œuvre de manière différenciée pour les différentes sources lumineuses, en fonction de contrôles individualisés liés à l'horloge, au capteur de luminosité ambiante 21 local, et/ou au capteur 17 de présence ou de mouvement local.

Comme visible sur la figure 9, le capteur 17a de présence dans la zone 8a de l'espace ambiant détecte la présence d'une personne 22 dans la zone 8a, et le contrôleur 15 commande le passage des sources UV 20a dans la zone 8a en mode actif.

Puis, comme visible sur la figure 10, le capteur 17b de présence dans la zone 8b de l'espace ambiant détecte la présence d'une personne 22 dans la zone 8b, et le contrôleur 15 commande le passage des sources UV 20b dans la zone 8b en mode actif. A ce titre, on peut remarquer que la zone de détection de présence d'une personne 22 dans la zone 8b est plus étendue que la zone d'éclairage proprement dite, de manière à anticiper l'arrivée de la personne 22 dans la zone d'éclairage. Ainsi, il peut s'agir d'une zone voisine de la zone d'éclairage.

Ces étapes peuvent être répétées au cours du cheminement de la personne le long du trajet.

La description ci-dessus est faite pour un espace linaire (par exemple un chemin, une route, une autoroute, ...) mais, en variante, on met en œuvre un tel système pour commander les sources lumineuses d'une zone surfacique (par exemple une esplanade ou un parking), voire volumique.

En effet, en variante, la face accessible 2 pourrait ne pas être horizontale, et/ou ne pas être plane et/ou pas tournée vers le haut. Elle pourrait par exemple être verticale, et/ou présenter une forme complexe non plane. Le composant structurel 1 pourrait être un mur, un plafond (face accessible 2 tournée vers le bas) ou une toiture.

Dans les exemples ci-dessus, les composants structurels 1 sont présentés comme dotés d'une surface accessible 2 toute entière dotée de la propriété de phosphorescence. Il faut noter que ces composants structurels peuvent être disposés dans l'espace ambiant de manière adjacente à des composants structurels non dotés de cette fonctionnalité. On fait référence par exemple à des pavés particuliers utilisés parmi des pavés classiques. La disposition des composants structurels phosphorescents peut alors être prévue en fonction d'un schéma prédéfini, par exemple pour réaliser un motif phosphorescent du genre ligne droite, ligne courbe, segments de droite ou de portions de surfaces de toute forme, ou tout autre motif réalisé à partir de gabarits.

En variante, le composant structurel est un composant étendu dont certaines parties seulement de la face accessible sont munies de cette fonctionnalité. On pense par exemple à un revêtement de route dans lequel les granulats phosphorescents 5 ont été intégrés uniquement en certains endroits, par exemple selon un motif particulier tel qu'une ligne.

### Références

Composant structurel 1
Face accessible 2
Matière phosphorescente 3
Matrice 4
Granulats phosphorescents 5
Base structurelle superficielle 6
Face accessible 7
Espace ambiant 8
Source lumineuse 9
Lampadaire 10
Mât 11
Muret 12
Garde-corps 13
Main courante 14
Contrôleur 15
Horloge 16
Capteur 17 de présence
Processeur 18
Source UV 19
Source visible 20
Capteur de luminosité ambiante 21
Personne 22

## Revendications

1. Système d'éclairage d'un espace ambiant comprenant:
- un composant structurel (1) comprenant au moins une face accessible (2) délimitant un espace ambiant (8), le composant structurel comprenant une matière (3) phosphorescente dans la lumière visible en réponse à une excitation dans une bande de longueur d'onde comprise entre 315 nanomètres et 380 nanomètres, disposée de manière à émettre ladite lumière visible depuis la face accessible (2),
- au moins une source lumineuse (9), disposée en regard de la face accessible (2), et comprenant au moins une source d'émission lumineuse d'excitation (19), associée à la matière phosphorescente, émettant dans une bande de longueur d'onde comprise entre 315 nanomètres et 380 nanomètres, la source lumineuse (9) étant contrôlée pour émettre une lumière d'excitation de manière à obtenir un éclairage contrôlé de l'espace ambiant (8) par phosphorescence de la matière phosphorescente (3).

2. Système d'éclairage selon la revendication 1, comprenant un contrôleur (15) contrôlant la source lumineuse (9) selon une règle de contrôle prédéterminée.

3. Système d'éclairage selon la revendication 2, dans lequel le contrôleur (15) contrôle la source lumineuse (9) pour émettre la lumière d'excitation selon un agenda temporel prédéterminé, notamment une fréquence prédéterminée.

4. Système d'éclairage selon la revendication 2 ou 3, dans lequel le contrôleur (5) contrôle la source lumineuse (9) en réaction à un signal obtenu par détection de présence ou de mouvement dans l'espace ambiant (8) ou dans un espace voisin de l'espace ambiant.

5. Système d'éclairage selon l'une des revendications 1 à 4, dans lequel la source lumineuse (9) est contrôlée en outre en fonction d'une information d'horloge (16).

6. Système d'éclairage selon l'une des revendications 1 à 5, comprenant en outre une source d'émission lumineuse dans le spectre visible (20), et dans lequel la source d'émission lumineuse dans le spectre visible (20) est contrôlée en outre pour émettre une lumière visible simultanément à la lumière d'excitation.

7. Système d'éclairage selon la revendication 6, dans lequel la source d'émission lumineuse dans le spectre visible (20) est contrôlée en fonction d'un agenda temporel prédéterminé, d'un signal obtenu par détection de présence ou de mouvement dans l'espace ambiant (8) ou dans un espace voisin de l'espace ambiant, d'un signal obtenu par détection de luminosité ambiante et/ou d'une information d'horloge.

8. Système selon la revendication 6 ou 7, dans lequel, dans une première phase, la source d'émission lumineuse dans le spectre visible (20) et la source d'émission lumineuse d'excitation (19) sont commandées pour émettre une lumière et, dans une deuxième phase, au moins la source d'émission lumineuse dans le spectre visible (20) est désactivée.

9. Système selon l'une des revendications 6 à 8, dans lequel la source d'émission lumineuse dans le spectre visible (20) et la source d'émission lumineuse d'excitation (19) sont comprises au sein d'une même source lumineuse (9), ou sont fournies dans des sources lumineuses distinctes espacées dans l'espace ambiant.

10. Système selon l'une des revendications 1 à 9, comprenant en outre au moins une deuxième source lumineuse (9'), disposée en regard de la face accessible (2), et comprenant au moins une deuxième source d'émission lumineuse d'excitation (19), associée à la matière phosphorescente, émettant dans une bande de longueur d'onde comprise entre 315 nanomètres et 380 nanomètres, la deuxième source lumineuse (9') étant contrôlée pour émettre une lumière excitatrice de manière à obtenir un éclairage contrôlé de l'espace ambiant (8) par luminescence de la matière phosphorescente.

11. Système selon la revendication 10, dans lequel la source lumineuse est une première source lumineuse, et dans lequel la première source lumineuse et la deuxième source lumineuse sont contrôlées de manière simultanée pour obtenir un éclairage contrôlé d'un espace ambiant (8) par luminescence des matières phosphorescentes (15).

12. Procédé d'éclairage d'un espace ambiant comprenant: un composant structurel (1) comprenant au moins une face accessible (2) délimitant un espace ambiant (8), le composant structurel (1) comprenant une matière (3) phosphorescente dans la lumière visible en réponse à une excitation dans une bande de longueur d'onde comprise entre 315 nanomètres et 380 nanomètres, disposée de manière à émettre depuis la face accessible (2), étant fourni, au moins une source lumineuse (9), disposée en regard de la face accessible, et comprenant au moins une source d'émission lumineuse d'excitation (19), associée à la matière (3) phosphorescente, émettant dans une bande de longueur d'onde comprise entre 315 nanomètres et 380 nanomètres, est contrôlée pour émettre une lumière excitatrice de manière à obtenir un éclairage contrôlé de l'espace ambiant par luminescence de la matière (3) phosphorescente.

13. Programme d'ordinateur comprenant des instructions de code de programme pour l'exécution des étapes du procédé selon la revendication 12 lorsque ledit programme est exécuté sur un ordinateur.
